# EUROPÄISCHE PATENTSCHRIFT

(11) **EP 0 689 676 B1**
(45) Veröffentlichungstag und Bekanntmachung des Hinweises auf die Patenterteilung: **29.04.1998**
(21) Anmeldenummer: 94908272.1
(22) Anmeldetag: 28.02.1994
(51) Int. Cl.: G01P 3/28

(54) **DREHZAHL-DRUCKWANDLER**
ROTATION SPEED-PRESSURE CONVERTER
CONVERTISSEUR VITESSE DE ROTATION-PRESSION

(30) Priorität: 15.03.1993 DE 4308206
(43) Veröffentlichungstag der Anmeldung: 03.01.1996
(73) Patentinhaber: SIEMENS AKTIENGESELLSCHAFT, 80333 München (DE)
(72) Erfinder: HARTMANN, Matthias, D-02828 Görlitz (DE); MÜRBE, Dieter, D-01069 Dresden (DE)
(86) Internationale Anmeldenummer: DE9400214
(87) Internationale Veröffentlichungsnummer: WO9422020

(56) Entgegenhaltungen:
- DE-A- 1 798 268
- DE-B- 1 268 888

## Beschreibung

Die Erfindung betrifft einen Wandler zur Bereitstellung einer unter einem einer Drehzahl eines um eine Achse rotierenden Zapfens entsprechenden Meßdruck stehenden Flüssigkeit in einer Meßleitung, bei dem der Zapfen in einem feststehenden Gehäuse gleitend gelagert ist und eine von einem Zapfenende entlang der Drehachse eingebrachte Zapfenbohrung hat, bei dem das Gehäuse eine den Zapfen umgebende erste Nut aufweist, die über zumindest eine Querbohrung in dem Zapfen mit der Zapfenbohrung kommuniziert, und bei dem ein mit einem unter einem Primärdruck stehenden Reservoir einerseits und einem drucklosen Sumpf andererseits verbindbarer Strömungspfad für die Flüssigkeit gebildet ist, welcher die erste Nut, die Querbohrung, die Zapfenbohrung und eine Drossel umfaßt, und von dem die Meßleitung zwischen der Querbohrung und der Drossel abzweigt.

Ein solcher Wandler wird auch als "Impeller" oder "Drehzahl-Druck-Wandler" bezeichnet; er liefert mit dem Meßdruck ein hydraulisches Signal, welches ein Maß für die Drehzahl ist. Ein solcher Wandler findet insbesondere Anwendung zur Drehzahlregelung einer Kraftmaschine, insbesondere einer Dampfturbine. Hierzu ist der rotierende Zapfen mit einer Abtriebswelle der Kraftmaschine verbunden, und der in der Meßleitung bereitgestellte, von der Drehzahl abhängige Meßdruck dient zur Steuerung einer Einrichtung, mit der die Drehzahl veränderbar ist. In dem Fall, daß die Kraftmaschine eine Dampfturbine ist, ist diese Einrichtung beispielsweise ein Drosselventil oder eine Anordnung mehrerer Drosselventile nebst zugehöriger Stelleinrichtung. Da der Wandler unmittelbar ein hydraulisches Signal liefert, ist er besonders geeignet zur Einbeziehung in eine hydraulische Regeleinrichtung, wie sie an Dampfturbinen vielfach Einsatz findet.

Wandler der in der Einleitung beschriebenen Art, die jeweils einer Dampfturbine zugeordnet sind, gehen aus dem Buch "Steam and Gas Turbines" von B.G.A. Skrotzki und W.A. Vopat, Mc.Graw-Hill Comp., Inc., New York, 1950, hervor - siehe Kapitel 7, Seiten 229 ff., insbesondere Seite 240, Fig. 7-18, und Seite 246, Fig. 7-28. Jede der Figuren zeigt einen Wandler der beschriebenen Art. Bei jedem der dargestellten Wandler wird einer ringförmigen Nut (in der Einleitung als "erste Nut" bezeichnet) in einer Lagerbohrung eines Gehauses, in dem ein mit einer Abtriebswelle verbundener Zapfen rotiert, über eine weitere Leitung, in der sich als Drossel eine Blende befindet, Flüssigkeit zugeführt aus einem Reservoir, welches insbesondere ein von einer Hauptölpumpe mit einem weitgehend konstanten Primärdruck beaufschlagtes Leitungssystem ist. Die Meßleitung, in der die Flüssigkeit mit einem von der Drehzahl des Zapfens abhängigen Meßdruck bereitgestellt werden soll, zweigt von der Nut ab. Die Wirkungsweise des Wandlers beruht darauf, daß zwischen dem Reservoir und der Meßleitung ein Fließgleichgewicht hergestellt wird, welches von der Drehzahl des Zapfens abhängig ist. Dazu enthält der Zapfen eine entlang seiner Drehachse eingebrachte Zapfenbohrung, in die etwa senkrecht zur Drehachse eingebrachte Querbohrungen münden. Diese Querbohrungen verbinden die Nut mit der Zapfenbohrung. In Abhängigkeit von der Drehzahl des Zapfens fließt durch die Querbohrungen eine mehr oder weniger große Menge an Flüssigkeit in die Ablaufbohrung, von wo sie einem drucklosen Sumpf, d.h. einem Sammelbehälter für die Flüssigkeit, zufließt. Der Abfluß der Flüssigkeit durch die Querbohrungen wird durch Zentrifugalkrafte umso mehr behindert, je schneller sich der Zapfen dreht. Hierdurch ergibt sich in der Nut aufgrund des sich einstellenden Fließgleichgewichtes ein Druck, der von der Drehzahl des Zapfens abhängig ist und sich als der gewünschte Meßdruck in die Meßleitung hinein fortsetzt. Wenn auch in dem Buch Wandler gezeigt sind, deren Zapfen unmittelbar Fortsetzungen der Abtriebswellen von Dampfturbinen sind, so haben sich doch solche Wandler in der Praxis nicht bewährt, da insbesondere kleine Exzentrizitäten in der Positionierung des Zapfens, welche aufgrund des stets vorhandenen Spiels der Abtriebswelle bedingt sind, die Funktion des Wandlers allzu stark beeinträchtigten. Weitere Nachteile liegen insbesondere bei Dampfturbinen vielfach in den hohen Drehzahlen der Abtriebswellen, welche die Bemessung der Wandler wesentlich erschweren. Aus diesem Grunde wurden Wandler in der Praxis nicht unmittelbar an den Abtriebswellen vorgesehen, sondern an separaten, relativ langsam drehenden und über entsprechende Getriebe von den Abtriebswellen angetriebenen besonderen Wellen.

In dem Buch ist auch die Einbeziehung eines Drehzahl-Druck-Wandlers in eine Regeleinrichtung für eine Dampfturbine erläutert, wobei insbesondere hydraulische Regeleinrichtungen eingehend beschrieben werden. Die Bevorzugung hydraulischer Regeleinrichtungen gründet sich insbesondere darauf, daß einer üblichen Kraftmaschine stets eine für hydraulische Zwecke geeignete Flüssigkeit, nämlich Schmieröl, aus einer Quelle mit einem ausreichend hohen Primärdruck zur Verfügung steht und somit ohne weiteres zum Betrieb einer hydraulischen Regeleinrichtung einsetzbar ist.

Weitere Ausführungen zu Regeleinrichtungen für Dampfturbinen sowie Schutzeinrichtungen, die üblicherweise Bestandteile solcher Regeleinrichtungen sind, gehen hervor aus den Offenlegungsschriften DE 31 38 561 A1 und DE 31 38 562 A1. Aus diesen Schriften sind insbesondere Einzelheiten zu hydraulischen Schalt- und Stellgliedern entnehmbar.

Aus dem US-Patent 3,395,718 geht ein Drehzahl-Druck-Wandler hervor, der anders als der in der Einleitung beschriebene Wandler nicht ein von der Drehzahl des Zapfens abhängiges, im wesentlichen stationäres Fließgleichgewicht benutzt, sondern bei dem in der Flüssigkeit Impulse in Form von Druckwellen erzeugt werden, deren vorgegebene Laufzeit durch eine Verzögerungsleitung in Relation gesetzt wird zur veränderlichen Drehzahl, wobei die Impulse nach Durchlaufen der Verzögerungsleitung einem an dem Zapfen gebildeten Schalter zugeführt werden, welcher die Verzögerungsleitung wechselweise mit der Meßleitung und dem Sumpf verbindet. Je nach der Drehzahl gelangen die Impulse zu einem mehr oder weniger großen Teil in die Meßleitung. Auf diese Weise wird in der Meßleitung der von der Drehzahl abhängige Meßdruck erzeugt, mit dem ein hydraulisches Stellglied beaufschlagt wird. Diesen Wandler kann man unter Verwendung des in der Elektronik gebräuchlichen Vokabulars als "digitalen" Wandler bezeichnen, da er hauptsächlich nur bestimmte vorgegebene Einheitsimpulse verarbeitet; ein Wandler der in der Einleitung genannten Art, der ohne Impulse auskommt, kann statt dessen als "analoger" Wandler angesehen werden. Im Gegensatz zum analogen Wandler sind dem digitalen Wandler naturgemäß Bestandteile wie Drosseln vollkommen fremd.

Aus der Offenlegungsschrift DE 17 98 268 A1 geht ebenfalls ein Wandler der in der Einleitung genannten Art, also ein analoger Wandler, hervor. Bei diesem Wandler ist die Zapfenbohrung zu einer Kammer erweitert, aus der Flüssigkeit, die durch Querbohrungen in dem Zapfen zufließt und teils durch eine Drossel zu einem Sumpf abfließt, teils hydraulischen Meßeinrichtungen über entsprechende Leitungen zugeführt wird. Der Zapfen rotiert in einem besonderen Gehäuse und ist nach Art einer zylindrischen Dose erweitert; der gesamte Inneraum des Gehäuses außerhalb des Zapfens ist im vorliegenden Zusammenhang als erste Nut anzusehen. Abseits der dosenartigen Erweiterung des Zapfens und der ersten Nut ist in dem Gehäuse eine den Zapfen umringende zweite Nut vorgesehen, welche durch Querbohrungen und eine Längsbohrung mit der ebenfalls stark erweiterten eigentlichen Zapfenbohrung kommuniziert, und von der aus die Meßleitung zu der hydraulischen Stelleinrichtung führt.

In Ansehung des Standes der Technik liegt die der Erfindung zugrundeliegende Aufgabe darin, einen Wandler der in der Einleitung beschriebenen Art anzugeben, bei dem die oben aufgezeigten Nachteile vermieden sind, bei dem der drehbare Zapfen unmittelbar an einer mit hoher Drehzahl drehenden Abtriebswelle einer Kraftmaschine angefügt sein kann und bei dem keine nachteiligen Beeinflussungen durch eventuell auftretende Exzentrizitäten des Zapfens oder schwankende Temperaturen der Flüssigkeit auftreten. Auch soll der Wandler möglichst einfach aufgebaut und geeignet zur Serienproduktion sein.

Zur Lösung dieser Aufgabe wird ein Wandler zur Bereitstellung einer unter einem einer Drehzahl eines um eine Achse rotierenden Zapfens entsprechenden Meßdruck stehenden Flüssigkeit in einer Meßleitung angegeben, bei dem
a) der Zapfen in einem feststehenden Gehäuse gleitend gelagert ist und eine von einem Zapfenende entlang der Drehachse eingebrachte Zapfenbohrung hat;
b) das Gehäuse eine den Zapfen umgebende erste Nut aufweist, die über zumindest eine Querbohrung in dem Zapfen mit der Zapfenbohrung kommuniziert;
c) ein mit einem unter einem Primardruck stehenden Reservoir einerseits und einen drucklosen Sumpf andererseits verbindbarer Strömungspfad für die Flüssigkeit gebildet ist, welcher die erste Nut,die Querbohrung, die Zapfenbohrung und eine Drossel umfaßt, und von dem die Meßleitung zwischen der Querbohrung und der Drossel abzweigt, wobei erfindungsgemäß die Drossel ein Spalt zwischen einem mit dem Gehäuse starr verbundenen Bauteil und dem Zapfen ist.

Ein wichtiges Merkmal des erfindungsgemäßen Wandlers ist die Einbeziehung der Drossel in die Lagerung des Zapfens in dem Gehäuse, da auf diese Weise sichergestellt ist, daß eine eventuelle Veränderung der Zufuhr der Flüssigkeit zu dem Zapfen, die sich ergibt aufgrund einer Exzentrizität des Zapfens, ausgeglichen wird dadurch, daß auch die Drossel eine entsprechende Formänderung erfährt und den Widerstand, den sie der durchströmenden Flüssigkeit entgegensetzt, der leicht veränderten Geometrie des Zapfens anpaßt. Hierdurch ergibt sich ein Meßdruck, der weitgehend unabhängig wird von der Exzentrizität des Zapfens in dem Gehäuse. Außerdem hat sich gezeigt, daß die Geometrie des Wandlers bewirkt, daß der Meßdruck nur noch sehr wenig von der Temperatur der Flüssigkeit abhängt. Auch dies liegt daran, daß eventuelle Leckagen der Flüssigkeit aus der ersten Nut ausgeglichen werden durch gleichlaufende Veranderungen der Strömung der Flüssigkeit durch den Spalt, der die Drossel bildet. Insgesamt ist also festzustellen, daß der erfindungsgemäße Wandler eine besonders genaue und von eventuell während des Betriebs auftretenden Exzentrizitäten und/oder Temperaturschwankungen allenfalls wenig beeinflußte Bestimmung der Drehzahl durch Auswertung des Meßdrucks erlaubt. Auch und insbesondere für sehr hohe Drehzahlen, wie sie oft an Dampfturbinen für industrielle Verwendung auftreten, ist die zuverlässige Gewinnung eines hydraulischen Signals, also des Meßdrucks, möglich. Auf bisher vielfach verwendete Vorschaltgetriebe zum Betrieb bekannter analoger Wandler kann gegebenenfalls verzichtet werden. Wesentliche Vereinfachungen hydraulischer Regelsysteme sind durch die Verwendung des erfindungsgemäßen Wandlers möglich. Darüber hinaus zeichnet sich der Wandler durch besonders einfache Fertigung aus, da die Bereitstellung einer besonderen Drossel entfällt, weil sich die Drossel als Spalt zwischen zwei ohnehin vorhandenen Komponenten ergibt. Daher eignet sich der Wandler auch besonders zur kostengünstigen Serienproduktion.

Bevorzugtermaßen hat der Zapfen des Wandlers eine zylindrische Gestalt und ist in einer zylindrischen Lagerbohrung des Gehäuses, in der die erste Nut als entsprechende Ausnehmung vorgesehen ist, gelagert. Diese Ausbildung kommt insbesondere der kostengünstigen Fertigung des Wandlers und seiner Komponenten entgegen.

Im Rahmen einer besonders bevorzugten Ausgestaltung weist die Lagerbohrung eine von der ersten Nut entlang der Drehachse beabstandete zweite Nut auf, die Drossel ist ein Spalt zwischen den Zapfen und der Lagerbohrung, durch den die zweite Nut mit der ersten Nut kommuniziert, und die Meßleitung zweigt von der ersten Nut ab. Diese Ausgestaltung impliziert, daß Flüssigkeit, die durch die Querbohrungen des Zapfens in die Zapfenbohrung gelangt, zum Sumpf abfließen muß. Das zur Bildung des Meßdrucks relevante Strömungsgleichgewicht in dem Wandler entsteht somit zu einem wesentlichen Teil innerhalb des Spalts zwischen dem Zapfen und der Lagerbohrung; daraus ergibt sich, daß dieser Wandler wenig empfindlich ist auf Exzentrizitäten des Zapfens in der Lagerbohrung, da eine eventuelle Veränderung des die Drossel bildenden Spaltes aufgrund einer Exzentrizität hinsichtlich ihrer Wirkung ausgeglichen wird durch die Wirkung der im Gleichlauf veränderten benachbarten Spalte, durch die Leckströme aus der ersten Nut oder der zweiten Nut durch den Spalt zwischen dem Zapfen und der Lagerbohrung abfließen. Auch ist diese Konfiguration kaum empfindlich für Temperaturänderungen der Flüssigkeit, was insbesondere an Dampfturbinen von besonderer Bedeutung ist zur Gewährleistung eines einwandfreien Startvorgangs, bei dem sich die Flüssigkeit naturgemäß merklich erwärmen muß.

Weiterhin bevorzugt ist es, daß die zweite Nut die Drehachse umringt, so daß zwischen der ersten Nut und der zweiten Nut ein den Zapfen vollständig umringender Spalt zur Verfügung steht und somit allfällige Leckströme besonders gering gehalten werden.

Mit weiterem Vorzug liegt die erste Nut, von der im Rahmen der besonders bevorzugten Ausbildung die Meßleitung abzweigt, zwischen der zweiten Nut und dem Zapfenende, da auch dies der Vermeidung größerer Leckströme förderlich ist. Naturgemäß spielen im Rahmen der an dieser Stelle beschriebenen Ausgestaltung Leckströme, die von der zweiten Nut ausgehen, allenfalls eine untergeordnete Rolle; von der ersten Nut können Leckströme nur in Richtung des Zapfenendes abfließen, wofür dann allerdings nur ein geringes Druckgefälle, nämlich die Differenz zwischen dem Meßdruck und dem Druck im Sumpf, zur Verfügung steht.

Zur weiteren Erhöhung der Genauigkeit des von diesem Wandler erhaltbaren Meßdrucks ist der Wandler vorzugsweise einem dem Zapfen zugeordneten Gleitlager unmittelbar benachbart, wobei das Gleitlager einen Lagerspalt aufweist, welcher niedriger ist als der Spalt in dem Wandler, der, wie eingehend ausgeführt, die Drossel des Wandlers darstellt. Auf diese Weise sind Schwingungen des Zapfens, die den Wandler beeinträchtigen könnten, in besonderem Maße unterdrückt und darüber hinaus die Exzentrizität des Zapfens auf einen unproblematischen Wert begrenzt.

Die Zapfenbohrung im Zapfen des Wandlers ist bevorzugtermaßen axialsymmetrisch bezüglich der Drehachse angeordnet, um sicherzustellen, daß eventuell vorhandene vielzählige Querbohrungen im wesentlichen übereinstimmende Eigenschaften hinsichtlich der Leitung der Flüssigkeit aufweisen und die Bildung von Druckwellen in der Flüssigkeit vermieden wird. Auf diese Weise wird ein gleichmäßiger Strom der Flüssigkeit zur der Zapfenbohrung und in der Zapfenbohrung erzielt, was der Genauigkeit der Beziehung zwischen dem Meßdruck und der Drehzahl förderlich ist. Besonders günstig ist es, wenn die Zapfenbohrung sich zum Zapfenende konisch erweitert, da auf diese Weise die Abführung der Flüssigkeit durch Zentrifugalkräfte unterstützt wird, was der Bildung eines definierten Drucks in der Zapfenbohrung förderlich ist. Insbesondere kann erreicht werden, daß der dem Sumpf zufließenden Flüssigkeit ein gewisser Druck mitgeteilt wird, welcher die Abförderung der Flüssigkeit aus dem Wandler unterstützt.

Im Rahmen einer alternativen Ausgestaltung des erfindungsgemäßen Wandlers ist die Zapfenbohrung in der Nähe des Zapfenendes bezüglich der Drehachse rotationssymmetrisch, und ein mit dem Gehäuse starr verbundener Stopfen ragt in die Zapfenbohrung hinein, wobei ein zwischen dem Stopfen und dem Zapfen belassener Spalt die Drossel bildet und wobei die Meßleitung durch den Stopfen aus der Zapfenbohrung abzweigt. Im Rahmen dieser Ausgestaltung können Leckströme aus der Zapfenbohrung, in der sich der gewünschte Meßdruck einstellt, praktisch verhindert werden, denn außer der Meßleitung gibt es nur eine einzige Möglichkeit für die Flüssigkeit, aus der Zapfenbohrung abzufließen, nämlich durch den als Drossel wirkenden Spalt. Da Leckströme aus der ersten Nut, die im Rahmen der soeben beschriebenen Ausgestaltung mit dem Primärdruck zu beaufschlagen ist, unmittelbar zum Sumpf gelangen und dementsprechend für die Bildung des Meßdrucks keine Rolle spielen, ergibt sich also ein Meßdruck, der von Leckströmen weitgehend unabhängig ist. Auch ist der Aufbau des Wandlers der soeben beschriebenen Ausgestaltung besonders einfach, da in der Lagerbohrung nur eine einzige Nut erforderlich ist und sich die Drossel beim Zusammenbau von selbst ergibt.

Auch der Wandler der soeben beschriebenen Ausgestaltung ist bevorzugtermaßen einem dem Zapfen zugeordneten Lager unmittelbar benachbart, um in bereits beschriebener Weise Schwingungen und Exzentrizitäten weitgehend zu vermeiden.

Bevorzugt ist es beim Wandler jedweder Ausgestaltung, daß die erste Nut die Drehachse umringt, um somit eine möglichst axialsymmetrische Ausgestaltung der funktionell wichtigen Komponenten zu gewährleisten und Druckschwankungen in der Flüssigkeit zu vermeiden.

Mit besonderem Vorzug hat der Zapfen eine Vielzahl von Querbohrungen, vorzugsweise zumindest vier Querbohrungen. Auch dies kommt der Gewährleistung eines möglichst axialsymmetrischen Strömungspfades für die Flüssigkeit in dem Wandler entgegen und ist für eine gleichmäßige Strömung der Flüssigkeit günstig. Grundsätzlich ist der Wandler jedweder Ausgestaltung besonders qualifiziert zur Anordnung unmittelbar an einer Abtriebswelle einer Kraftmaschine, ohne Zwischenschaltung eines Getriebes. Der Wandler ermöglicht somit mit geringem baulichem Aufwand den Erhalt eines qualitativ hochwertigen hydraulischen Signals zur Bestimmung der Drehzahl der Abtriebswelle.

Der Wandler jedweder Ausgestaltung findet vorzugsweise Verwendung unter Einsatz eines Öls, insbesondere eines Schmieröls oder eines Hydrauliköls, als Flüssigkeit, in der der gewünschte Meßdruck bereitzustellen ist.

Der Wandler wird zur Bereitstellung der unter dem der Drehzahl entsprechenden Meßdruck stehenden Flüssigkeit vorzugsweise bei einer Drehzahl zwischen etwa 6000/min und etwa 20000/min, insbesondere zwischen 9000/min und 16000/min, betrieben. Damit ist der Wandler besonders qualifiziert zum Einsatz zusammen mit einer Dampfturbine.

Die unter dem Meßdruck stehende Flüssigkeit wird bevorzugtermaßen einem hydraulischen Drehzahlregler für die Welle, deren Bestandteil der Zapfen des Wandlers ist, zugeführt. Der Drehzahlregler ist insbesondere einer Kraftmaschine, beispielsweise einer Dampfturbine, zugeordnet, wobei die Welle, auf der der Wandler aufsitzt, eine Abtriebswelle der Kraftmaschine ist.

Der Wandler wird vorzugsweise so bemessen und betrieben, daß der bereitgestellte Meßdruck zwischen 1 x 10⁵ Pa und 4 x 10⁵ Pa liegt. Der Primärdruck, d.h. der Druck, unter dem die Flüssigkeit dem Wandler zugeführt wird, beträgt vorzugsweise etwa 10⁶ Pa.

Der Wandler wird vorzugsweise so ausgeführt sowie der Primärdruck und der Meßdruck im Rahmen der Verwendung des Wandlers so eingestellt, daß der Meßdruck zwischen 10 % und 60 % des Primärdrucks, vorzugsweise zwischen etwa 30 % und etwa 50 % des Primärdrucks, beträgt. Mit dieser Bemessung ist eine hohe Genauigkeit in der Einstellung des Meßdrucks in Abhängigkeit von der Drehzahl gewährleistet; insbesondere mit einem Wandler gemäß der oben beschriebenen besonders bevorzugten Ausführungsform wird dabei eine Abhängigkeit des Meßdrucks von der Drehzahl erreicht, die für den Einsatz zur Drehzahlregelung einer Dampfturbine besonders günstig ist.

Ausführungsbeispiele für den Wandler und seine Verwendung gehen aus der Zeichnung hervor und werden nachfolgend erläutert. Die Zeichnung ist teilweise schematisiert und/oder leicht verzerrt ausgeführt, um bestimmte Merkmale des Wandlers besonders herauszustellen. In der Zeichnung zeigen im einzelnen:
FIG 1 und 2 Längsschnitte durch die besonders bevorzugte Ausführungsform des Wandlers, FIG 1 außerdem schematisch angedeutete Merkmale zum Einsatz und zur Verwendung des Wandlers;
FIG 3 einen Längsschnitt durch eine andere Ausführungsform des Wandlers.

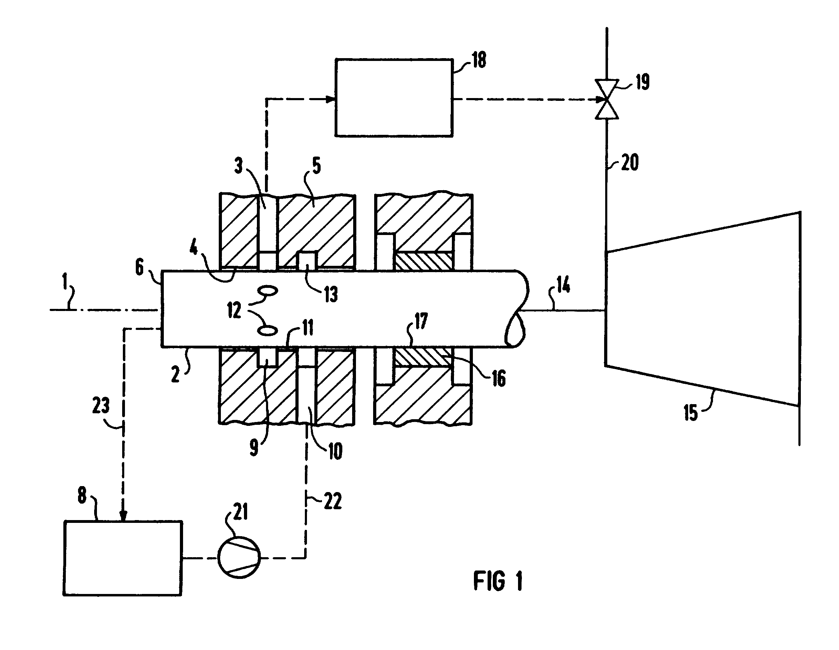

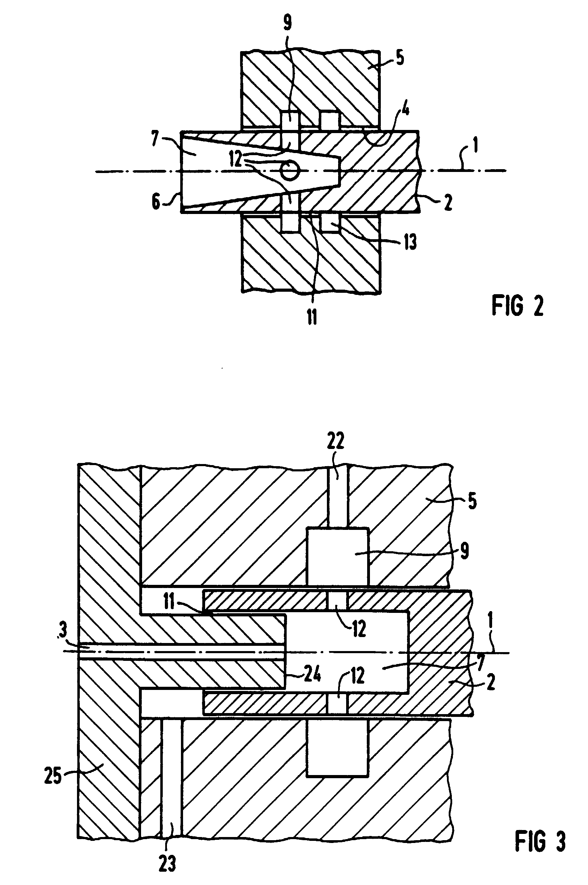

Zur näheren Erläuterung der Ausführungsform gemäß den Figuren 1 und 2 wird zunächst auf diese Figuren gemeinsam Bezug genommen. Der Wandler hat einen Zapfen 2, der um eine Drehachse 1 drehbar und in einer Lagerbohrung 4 eines Gehäuses 5 angeordnet ist. In die Lagerbohrung 4 eingearbeitet ist eine erste Nut 9, welche die Drehachse 1 umringt und welche mit einer Meßleitung 3 kommuniziert, in der eine unter einem Meßdruck stehende Flüssigkeit bereitgestellt werden soll, wobei der Meßdruck abhängig, im vorliegenden Fall etwa quadratisch abhängig, von einer Drehzahl ist, mit der sich der Zapfen 2 um die Drehachse 1 dreht. Hierfür wird der ersten Nut 9 aus einem Reservoir 10 die unter einem vorgegebenen Primärdruck stehende Flüssigkeit zugeführt, wobei die Flüssigkeit durch eine Drossel 11 der ersten Nut 9 zufließt. Aus der ersten Nut 9 gelangt die Flüssigkeit durch Querbohrungen 12 in eine in dem Zapfen 2 befindliche Zapfenbohrung 7 und tritt aus dieser am Zapfenende 6 aus, um einem drucklosen Sumpf 8 zugeführt zu werden. Wenn der Zapfen 2 sich dreht, wird der Durchfluß der Flüssigkeit durch die Querbohrungen 12 aufgrund der auftretenden Zentrifugalkräfte behindert, so daß der in der ersten Nut 9 und der Meßleitung 3 sich bildende Meßdruck um so höher ist, je höher die Drehzahl des Zapfens 2 ist. Ein wichtiges Merkmal des Wandlers ist die Art und Weise, wie die Drossel 11 realisiert ist. Zur Zuführung der Flüssigkeit ist nämlich eine neben der ersten Nut 9 liegende zweite Nut 13 vorgesehen, der die Flüssigkeit unter dem Primärdruck zugestellt wird. Die Drossel 11 ist der zwischen der ersten Nut 9 und der zweiten Nut 13 erstreckte Spalt zwischen dem Zapfen 2 und dem Gehäuse 5; das für die Bildung des Meßdrucks letztlich wichtige Fließgleichgewicht ist bestimmt durch diesen Spalt 11 und die Querbohrungen 12. Die erste Nut 9 befindet sich zwischen der zweiten Nut 13 und dem Zapfenende 6; dadurch ergibt sich ein wohldefinierter Leckstrom zum Zapfenende 6, der von denselben geometrischen Gegebenheiten bestimmt ist wie der Strom durch den Spalt 11 und somit Schwankungen in diesem Strom aufgrund von Schwankungen der Exzentrizität des Zapfens 2 oder der Temperatur der Flüssigkeit auszugleichen vermag. Die Zapfenbohrung 7 in dem Zapfen 2 ist konisch ausgeführt, damit zur Abführung der Flüssigkeit Zentrifugalkräfte, welche sich durch die Rotation des Zapfens 2 ergeben, genutzt werden.

Weitere Merkmale zum Einsatz und zur Verwendung des Wandlers gehen aus Figur 1 hervor. Der Zapfen 2 bildet unmittelbar eine Fortsetzung einer Abtriebswelle 14 einer Kraftmaschine 15, und zwar einer Dampfturbine 15. Es ist bereits erwähnt worden, daß der Wandler insbesondere einsetzbar ist bei einer sehr hohen Drehzahl des Zapfens 2, wie sie an einer Abtriebswelle 14 einer üblichen Industrie-Dampfturbine vorkommt. Unmittelbar neben dem Wandler ist ein Lager 16 für den Zapfen 2 bzw. die Antriebswelle 14 angeordnet. Dieses Lager 16 ist ein Gleitlager und weist einen Lagerspalt 17 zwischen dem Zapfen 2 und dem Lager 16 auf, welcher deutlich kleiner ist als der Spalt 11 in dem Wandler. Derart ist die mögliche Exzentrizität des Zapfens 2 durch den Lagerspalt 17 begrenzt, was für die Exaktheit der Abhängigkeit des Meßdrucks von der Drehzahl günstig ist. Das Reservoir 10, aus dem der Wandler mit dem unter dem Primardruck stehenden Flüssigkeit beaufschlagt wird, ist üblicherweise ein Leitungssystem, welches, wie beispielhaft dargestellt, mittels einer Pumpe 21 sowie eventuellen Regeleinrichtungen für den Primärdruck mit der Flüssigkeit beaufschlagt wird. In Figur 1 ist repräsentativ für ein solches Leitungssystem eine einzige, zur zweiten Nut 13 führende Zuleitung 22 gezeigt. Entsprechend der üblichen Praxis wird die Flüssigkeit, mit der der Wandler beaufschlagt wird, in einem Kreislauf geführt. Dieser Kreislauf ist angedeutet durch eine Ableitung 23, durch die die Flüssigkeit, die aus der Zapfenbohrung 7 am Zapfenende 6 austritt, dem Sumpf 8, insbesondere einem Vorratsbehälter, zugeführt wird. Aus dem Sumpf 8 gelangt die Flüssigkeit zur Pumpe 21, um wiederum auf den Primärdruck gebracht und dem Reservoir 10 zugeführt zu werden. Es versteht sich, daß die Ableitung 23 ebenso wie die Zuleitung 22 als repräsentativ für ein größeres Leitungssystem anzusehen ist, worin beispielsweise Ableitungen für Flüssigkeit, die aus Lagern oder anderen hydraulischen Systemen ausgetreten ist, einbezogen sind.

Der Wandler dient entsprechend üblicher Praxis zur Regelung der Drehzahl der Dampfturbine 15. Hierzu wird durch die Meßleitung 3 ein Drehzahlregler 18 mit dem Meßdruck beaufschlagt, und in Abhängigkeit von dem Meßdruck steuert der Drehzahlregler 18 ein entsprechendes Turbinenventil 19 in einer Turbinenzuleitung 20, durch welche die Dampfturbine 15 mit Dampf beaufschlagt wird. Üblicherweise ist der Drehzahlregler 18 ein weitgehend vollständig hydraulisches System, welches ein ebenfalls hydraulisch betätigtes Turbinenventil 19 steuert. Nicht unbedingt wesentlich für die Funktion des Wandlers ist die Frage, ob die Flüssigkeit in der Meßleitung 3 steht oder strömt; gegebenenfalls ist darauf, entsprechend den Anforderungen der an die Meßleitung 3 anzuschließenden Instrumente und Einrichtungen, wie beispielsweise des Drehzahlreglers 18, bei der Auslegung des Wandlers Rücksicht zu nehmen.

Figur 3 zeigt eine andere Ausgestaltung des Wandlers. Bei diesem Wandler rotiert der Zapfen ebenfalls in einem Gehäuse 5 und ist von der ersten Nut 9, welche über die Zuleitung 22 mit der unter dem Primardruck stehenden Flüsssigkeit beaufschlagt wird, umringt. Aus der ersten Nut 9 gelangt die Flüssigkeit durch Querbohrungen 12 in die Zapfenbohrung 7 des Zapfens 2 hinein. Die Zapfenbohrung 7 ist verschlossen mittels eines Stopfens 24, welcher in die Zapfenbohrung 7 hineinragt unter Belassung eines Spaltes 11, der als die erforderliche Drossel fungiert. Flüssigkeit, die durch den Spalt 11 fließt, wird durch die Ableitung 23 abgeführt. Die Meßleitung 3 zweigt durch den Stopfen 24 hindurch von der Zapfenbohrung 7 ab. Der Stopfen 24 ist angeordnet an einem Deckel 25, mit dem das Gehäuse 5 zu verschließen ist.

Bei dem Wandler gemäß Figur 3 hängt der Meßdruck in monoton fallender Weise von der Drehzahl ab, anders als bei dem Wandler gemäß den Figuren 1 und 2, bei dem der Meßdruck monoton steigend von der Drehzahl abhängt. Grundsätzlich tut dies allerdings der Anwendbarkeit des Wandlers zur Regelung einer Kraftmaschine keinen Abbruch.

Der Wandler jedweder Ausgestaltung zeichnet sich aus durch hohe Genauigkeit der Abhängigkeit des Meßdrucks von der Drehzahl, und er ist besonders geeignet, um unmittelbar an die Abtriebswelle einer Kraftmaschine nach Art einer Dampfturbine für Industriezwecke angefügt zu werden. Die Anwendung des Wandlers erfordert nur einen geringen apparativen Aufwand; sie gewährleistet eine hohe Betriebssicherheit insbesondere im Zusammenhang mit der Regelung der Drehzahl einer Kraftmaschine.

## Patentansprüche

1. Wandler zur Bereitstellung einer unter einem einer Drehzahl eines um eine Achse (1) rotierenden Zapfens (2) entsprechenden Meßdruck stehenden Flüssigkeit in einer Meßleitung (3), bei dem
a) der Zapfen (2) in einem feststehenden Gehäuse (5) gleitend gelagert ist und eine von einem Zapfenende (6) entlang der Drehachse (1) eingebrachte Zapfenbohrung (7) hat;
b) das Gehäuse (5) eine den Zapfen (2) umgebende erste Nut (9) aufweist, die über zumindest eine Querbohrung (12) in dem Zapfen (2) mit der Zapfenbohrung (7) kommuniziert;
c) ein mit einem unter einem Primärdruck stehenden Reservoir (10) einerseits und einem drucklosen Sumpf (8) andererseits verbindbarer Strömungspfad für die Flüssigkeit gebildet ist, welcher die erste Nut (9), die Querbohrung (12), die Zapfenbohrung (7) und eine Drossel (11) umfaßt, und von dem die Meßleitung (3) im Strömungspfad zwischen der Querbohrung (12) und der Drossel (11) abzweigt;
**dadurch gekennzeichnet**, daß die Drossel (11) ein Spalt (11) zwischen einem mit dem Gehäuse (5) starr verbundenen Bauteil (5, 24) und dem Zapfen (2) ist.

2. Wandler nach Anspruch 1, bei dem der Zapfen (2) zylindrisch und in einer zylindrischen Lagerbohrung (4) des Gehäuses (5), in der die erste Nut (9) liegt, gelagert ist.

3. Wandler nach Anspruch 2, bei dem
a) die Lagerbohrung (4) eine von der ersten Nut (9) entlang der Drehachse (1) beabstandete zweite Nut (13) aufweist;
b) die Drossel (11) ein Spalt (11) zwischen dem Zapfen (2) und der Lagerbohrung (4) ist, durch den die zweite Nut (13) mit der ersten Nut (9) kommuniziert;
c) die Meßleitung (3) von der ersten Nut (9) abzweigt.

4. Wandler nach Anspruch 3, bei dem die zweite Nut (13) die Drehachse (1) umringt.

5. Wandler nach Anspruch 3 oder 4, bei dem die erste Nut (9) zwischen der zweiten Nut (13) und dem Zapfenende (6) liegt.

6. Wandler nach einem der Ansprüche 3 bis 5, der einem dem Zapfen (2) zugeordneten Gleitlager (16) unmittelbar benachbart ist, wobei das Gleitlager (16) einen Lagerspalt (17) aufweist, welcher niedriger ist als der Spalt (11) in dem Wandler.

7. Wandler nach einem der vorhergehenden Ansprüche, bei dem die Zapfenbohrung (7) axialsymmetrisch bezüglich der Drehachse (1) ist.

8. Wandler nach Anspruch 7, bei dem die Zapfenbohrung (7) konisch ist.

9. Wandler nach Anspruch 1, bei dem
a) die Zapfenbohrung (7) in der Nähe des Zapfenendes (6) bezüglich der Drehachse (1) rotationssymmetrisch ist;
b) ein mit dem Gehäuse (5) starr verbundener Stopfen (24) in die Zapfenbohrung (7) hineinragt, wobei ein zwischen dem Stopfen (24) und dem Zapfen (2) belassener Spalt (11) die Drossel (11) bildet, und wobei die Meßleitung (3) durch den Stopfen (24) aus der Zapfenbohrung (7) abzweigt.

10. Wandler nach Anspruch 9, welcher einem dem Zapfen (2) zugeordneten Lager (16) unmittelbar benachbart ist.

11. Wandler nach einem der vorhergehenden Ansprüche, bei dem die erste Nut (9) die Drehachse (1) umringt.

12. Wandler nach einem der vorhergehenden Ansprüche, bei dem der Zapfen (2) eine Vielzahl von Querbohrungen (12) aufweist, vorzugsweise zumindest vier Querbohrungen (12).

13. Wandler nach einem der vorhergehenden Ansprüche, bei dem der Zapfen (2) sich an einer um die Drehachse (1) drehbaren Abtriebswelle (14) einer Kraftmaschine (15), insbesondere einer Dampfturbine (15), befindet.

14. Verwendung des Wandlers nach einem der vorhergehenden Ansprüche zur Bereitstellung der unter dem der Drehzahl entsprechenden Meßdruck stehenden Flüssigkeit, wobei die Flüssigkeit ein Öl, insbesondere ein Schmieröl oder ein Hydrauliköl, ist.

15. Verwendung nach Anspruch 14 oder Verwendung des Wandlers nach einem der Ansprüche 1 bis 13 zur Bereitstellung der unter dem der Drehzahl entsprechenden Meßdruck stehenden Flüssigkeit, wobei die Drehzahl zwischen etwa 6000/min und etwa 20000/min, insbesondere zwischen 9000/min und 16000/min, liegt.

16. Verwendung nach Anspruch 14 oder 15 oder Verwendung des Wandlers nach einem der Ansprüche 1 bis 13 zur Bereitstellung der unter dem der Drehzahl entsprechenden Meßdruck stehenden Flüssigkeit, wobei die unter dem Meßdruck stehende Flüssigkeit einen Drehzahlregler (18) beaufschlagt.

17. Verwendung nach Anspruch 16, wobei der Drehzahlregler (18) einer Kraftmaschine (15), insbesondere einer Dampfturbine (15), zugeordnet ist.

18. Verwendung nach einem der Ansprüche 14 bis 17 oder Verwendung des Wandlers nach einem der Ansprüche 1 bis 13 zur Bereitstellung der unter dem der Drehzahl entsprechenden Meßdruck stehenden Flüssigkeit, wobei der Meßdruck zwischen 1 x 10⁵ Pa und 4 x 10⁵ Pa beträgt.

19. Verwendung nach einem der Ansprüche 14 bis 18 oder Verwendung des Wandlers nach einem der Ansprüche 1 bis 13 zur Bereitstellung der unter dem der Drehzahl entsprechenden Meßdruck stehenden Flüssigkeit, wobei der Primardruck etwa 10⁶ Pa beträgt.

20. Verwendung nach einem der Ansprüche 14 bis 19 oder Verwendung des Wandlers nach einem der Ansprüche 1 bis 13 zur Bereitstellung der unter dem der Drehzahl entsprechenden Meßdruck stehenden Flüssigkeit, wobei der Meßdruck zwischen 10 % und 60 % des Primärdrucks, vorzugsweise zwischen etwa 30 % und etwa 50 % des Primärdrucks, beträgt.

## Claims

1. Transducer for supplying a fluid, which is under a measuring pressure corresponding to a rotational speed of a pin (2) rotating about an axis (1), in a measuring line (3), in which
a) the pin (2) is mounted slidably in a stationary housing (5) and has a pin bore (7) made along the axis of rotation (1) from one pin end (6);
b) the housing (5) has a first groove (9) which surrounds the pin (2) and which communicates with the pin bore (7) via at least one transverse bore (12) in the pin (2);
c) there is formed for the fluid a flow path which is connectable to a reservoir (10) standing under a primary pressure, on the one hand, and a pressureless sump (8), on the other hand, and comprises the first groove (9), the transverse bore (12), the pin bore (7) and a throttle (11) and from which the measuring line (3) in the flow path branches off between the transverse bore (12) and the throttle (11);
characterized in that the throttle (11) is a gap (11) between a structural part (5, 24) rigidly connected to the housing (5) and the pin (2).

2. Transducer according to Claim 1, in which the pin (2) is cylindrical and is mounted in a cylindrical bearing bore (4) of the housing (5), in which bearing bore (4) the first groove (9) is located.

3. Transducer according to Claim 2, in which
a) the bearing bore (4) has a second groove (13) spaced from the first groove (9) along the axis of rotation (1);
b) the throttle (11) is a gap (11) which is located between the pin (2) and the bearing bore (4) and through which the second groove (13) communicates with the first groove (9);
c) the measuring line (3) branches off from the first groove (9).

4. Transducer according to Claim 3, in which the second groove (13) encircles the axis of rotation (1).

5. Transducer according to Claim 3 or 4, in which the first groove (9) is located between the second groove (13) and the pin end (6).

6. Transducer according to one of Claims 3 to 5, which is directly adjacent to a sliding bearing (16) assigned to the pin (2), the sliding bearing (16) having a bearing gap (17) which is lower than the gap (11) in the transducer.

7. Transducer according to one of the preceding claims, in which the pin bore (7) is axially symmetrical relative to the axis of rotation (1).

8. Transducer according to Claim 7, in which the pin bore (7) is conical.

9. Transducer according to Claim 1, in which
a) the pin bore (7) is rotationally symmetrical relative to the axis of rotation (1) in the vicinity of the pin end (6);
b) a plug (24) rigidly connected to the housing (5) projects into the pin bore (7), a gap (11) left between the plug (24) and the pin (2) forming the throttle (11), and the measuring line (3) branching off from the pin bore (7) through the plug (24).

10. Transducer according to Claim 9, which is directly adjacent to a bearing (16) assigned to the pin (2).

11. Transducer according to one of the preceding claims, in which the first groove (9) encircles the axis of rotation (1).

12. Transducer according to one of the preceding claims, in which the pin (2) has a plurality of transverse bores (12), preferably at least four transverse bores (12).

13. Transducer according to one of the preceding claims, in which the pin (2) is located on an output shaft (14) of a power engine (15), especially of a steam turbine (15), the said output shaft (14) being rotatable about the axis of rotation (1).

14. Use of the transducer according to one of the preceding claims for supplying the fluid which is under the measuring pressure corresponding to the rotational speed, the fluid being an oil, especially a lubricating oil or a hydraulic oil.

15. Use according to Claim 14 or use of the transducer according to one of Claims 1 to 13 for supplying the fluid which is under the measuring pressure corresponding to the rotational speed, the rotational speed being between approximately 6000/min and approximately 20,000/min, especially between 9000/min and 16,000/min.

16. Use according to Claim 14 or 15 or use of the transducer according to one of Claims 1 to 13 for supplying the fluid which is under the measuring pressure corresponding to the rotational speed, the fluid which is under the measuring pressure loading a speed governor (18).

17. Use according to Claim 16, the speed governor (18) being assigned to a power engine (15), especially to a steam turbine (15).

18. Use according to one of Claims 14 to 17 or use of the transducer according to one of Claims 1 to 13 for supplying the fluid which is under the measuring pressure corresponding to the rotational speed, the measuring pressure amounting to between 1 × 10⁵ Pa and 4 × 10⁵ Pa.

19. Use according to one of Claims 14 to 18 or use of the transducer according to one of Claims 1 to 13 for supplying the fluid which is under the measuring pressure corresponding to the rotational speed, the primary pressure amounting to approximately 10⁶ Pa.

20. Use according to one of Claims 14 to 19 or use of the transducer according to one of Claims 1 to 13 for supplying the fluid which is under the measuring pressure corresponding to the rotational speed, the measuring pressure amounting to between 10 % and 60 % of the primary pressure, preferably between approximately 30 % and approximately 50 % of the primary pressure.

## Revendications

1. Convertisseur destiné à fournir dans une conduite (3) de mesure un liquide à une pression de mesure correspondant à une vitesse de rotation d'un tourillon (2) tournant autour d'un axe (1), convertisseur dans lequel
a) le tourillon (2) est monté coulissant dans un boîtier (5) fixe et possède un alésage (7) s'étendant à partir d'une extrémité (6) du tourillon le long de l'axe (1) de rotation ;
b) le boîtier (5) comporte une première gorge (9) qui entoure le tourillon (2) et communique avec l'alésage (7) du tourillon par l'intermédiaire d'au moins un perçage transversal (12) du tourillon (2) ;
c) il est formé une voie d'écoulement pour le liquide qui peut communiquer d'une part avec un réservoir (10) à une pression primaire et d'autre part avec un bassin (8) exempt de pression, qui entoure la première gorge (9), le perçage transversal (12), l'alésage (7) du tourillon et un étranglement (11), et d'autre part la conduite (3) de mesure entre le perçage transversal (12) et l'étranglement (11),
caractérisé en ce que l'étranglement (11) est un interstice (11) entre une pièce (5, 24) reliée rigidement au boîtier (5) et le tourillon (2).

2. Convertisseur selon la revendication 1, dans lequel le tourillon (2) est cylindrique et est monté dans un alésage (4) de montage cylindrique du boîtier (5) dans lequel se trouve la première gorge (9).

3. Convertisseur selon la revendication 2, dans lequel
a) l'alésage (4) de montage comporte une deuxième gorge (13) à distance de la première gorge (9) le long de l'axe (1) de rotation ;
b) l'étranglement (11) est un interstice (11) entre le tourillon (2) et l'alésage (4) de montage par lequel la deuxième gorge (13) communique avec la première gorge (9) ;
c) la conduite (3) de mesure part de la première gorge (9).

4. Convertisseur selon la revendication 3, dans lequel la deuxième gorge (13) entoure l'axe (1) de rotation.

5. Convertisseur selon la revendication 3 ou 4, dans lequel la première gorge (9) se trouve entre la deuxième gorge (13) et l'extrémité (6) du tourillon.

6. Convertisseur selon l'une des revendications 3 à 5, qui est au voisinage direct d'un palier (16) lisse associé au tourillon (2), le palier (16) lisse présentant un interstice (17) qui est plus petit que l'interstice (11) dans le convertisseur.

7. Convertisseur selon l'une des revendications précédentes, dans lequel l'alésage (7) du tourillon est axisymétrique par rapport à l'axe (1) de rotation.

8. Convertisseur selon la revendication 7, dans lequel l'alésage (7) du tourillon est conique.

9. Convertisseur selon la revendication 1, dans lequel
a) l'alésage (7) du tourillon est, au voisinage de l'extrémité (6) du tourillon, à symétrie de révolution par rapport à l'axe (1) de rotation ;
b) un bouchon (24) relié rigidement au boîtier (5) fait saillie dans l'alésage (7) du tourillon, un interstice (11) qui subsiste entre le bouchon (24) et le tourillon (2) formant l'étranglement (11) et la conduite (3) de mesure partant de l'alésage (7) du tourillon en traversant le bouchon (24).

10. Convertisseur selon la revendication 9 qui est au voisinage direct d'un palier (16) associé au tourillon (2).

11. Convertisseur selon l'une des revendications précédentes, dans lequel la première gorge (9) entoure l'axe (1) de rotation.

12. Convertisseur selon l'une des revendications précédentes, dans lequel le tourillon (2) comporte une pluralité de perçages (12) transversaux, de préférence au moins quatre perçages (12) transversaux.

13. Convertisseur selon l'une des revendications précédentes, dans lequel le tourillon (2) se trouve sur un arbre de sortie (14), tournant autour de l'axe (1) de rotation, d'un moteur (15), en particulier d'une turbine (15) à vapeur.

14. Utilisation du convertisseur selon l'une des revendications précédentes pour fournir le liquide à la pression de mesure correspondant à la vitesse de rotation, le liquide étant une huile, en particulier une huile de graissage ou une huile hydraulique.

15. Utilisation selon la revendication 14 ou utilisation du convertisseur selon l'une des revendications 1 à 13 pour fournir le liquide à la pression de mesure correspondant à la vitesse de rotation, la vitesse de rotation étant comprise entre environ 6000/min et environ 20000/min, en particulier entre 9000/min et 16000/min.

16. Utilisation selon la revendication 14 ou 15 ou utilisation du convertisseur selon l'une des revendications 1 à 13 pour fournir le liquide à la pression de mesure correspondant à la vitesse de rotation, le liquide à la pression de mesure alimentant un régulateur (18) de vitesse de rotation.

17. Utilisation selon la revendication 16, le régulateur (18) de vitesse de rotation étant associé à un moteur (15), en particulier à une turbine (15) à vapeur.

18. Utilisation selon l'une des revendications 14 à 17 ou utilisation du convertisseur selon l'une des revendications 1 à 13 pour fournir le liquide à la pression de mesure correspondant à la vitesse de rotation, la pression de mesure étant comprise entre 1 x 10⁵ Pa et 4 x 10⁵ Pa.

19. Utilisation selon l'une des revendications 14 à 18 ou utilisation du convertisseur selon l'une des revendications 1 à 13 pour fournir le liquide à la pression de mesure correspondant à la vitesse de rotation, la pression primaire étant d'environ 10⁶ Pa.

20. Utilisation selon l'une des revendications 14 à 19 ou utilisation du convertisseur selon l'une des revendications 1 à 13 pour fournir le liquide à la pression de mesure correspondant à la vitesse de rotation, la pression de mesure représentant entre 10 et 60% de la pression primaire, de préférence entre environ 30 et environ 50% de la pression primaire.
